# EUROPEAN PATENT APPLICATION

(11) **EP 4 246 785 A1**
(43) Date of publication of application: **20.09.2023**
(21) Application number: 22162426.5
(22) Date of filing: 16.03.2022
(51) Int. Cl.: H02K 15/16, H02K 5/15, H02K 1/2786, H02K 7/18, H02K 15/00, H02K 5/173

(54) **MEASURING METHOD OF A ROTOR ASSEMBLY FOR A WIND TURBINE**

(71) Applicant: Siemens Gamesa Renewable Energy A/S, 7330 Brande (DK); Siemens Gamesa Renewable Energy GmbH & Co. KG, 20097 Hamburg (DE)
(72) Inventor: Fürst-Sylvester, Marius, 27478 Cuxhaven (DE); Henriksen, Benjamin, 7400 Herning (DK); Schneider, Thorsten, 27478 Cuxhaven (DE); Soerensen, Martin Bach, 7400 Herning (DK)
(74) Representative: SGRE-Association

(57) **Abstract**

An assembly method for assembling an outer rotor (30) of an electrical generator (10), the rotor (30) including a rotor house (31) and a rotor bearing (32), the method including the steps of:

- defining a plurality of points (111,112,113,114,115) on the rotor house (31) to be measured on an inside of the rotor house (31),

- defining an optimum position for the axis of the rotor bearing (32) so that a variability parameter of a plurality of distances (Di) between said optimum position and the plurality of points on the rotor house (31) is minimized,

- changing the position of the rotor bearing (32) with respect to the rotor house (31), so that the distance between the axis of the rotor bearing (32) and the optimum position is minimized.

## Description

### Field of the invention

The invention relates to a method and an arrangement for measuring the position of a plurality of points in a rotor of an electrical generator. The invention further relates to a method for assembling a rotor for an electrical generator. Particularly, but not exclusively, the invention can be applied to an electrical generator for a wind turbine. More particularly, but not exclusively, the invention can be applied to a permanent magnet electrical generator.

### Art background

The airgap, which is formed between the stator and a rotor in a wind turbine electrical generator is an important design feature that contributes to the overall efficiency of the wind turbine. The tighter the airgap is and the less it fluctuates over the lateral surfaces at the axial ends of the stator and the rotor, the more energy can be generated and the higher the efficiency is. Fluctuations of the airgap are in particular influenced by the eccentricity of the coupling between the stator and the rotor of the electrical generator. The overall eccentricity is determined by the shape of the rotor house and of the bearing assembly, by the different radial extensions of the magnets and by the misalignment between the axes of the rotor and the stator.

It is therefore desirable to provide a method and an arrangement for measuring the shape in a rotor an electrical generator for a wind turbine. It is further desirable to provide a method for assembling an electrical generator, which minimizes the eccentricity of the coupling between the stator and the rotor.

### Summary of the invention

This need may be met by the subject matter according to the independent claims. Advantageous embodiments of the present invention are described by the dependent claims.

According to a first aspect of the present invention it is provided a method for measuring the position of a plurality of points in a rotor of an electrical machine, the rotor including a rotor house, a rotor bearing and a brake disc, the method including the steps of:
forming an assembly including the rotor house, the rotor bearing and the brake disc,
mounting a measurement device inside the assembly,
relatively moving the rotor and the measurement device and determining a plurality of distances between an axis of the rotor house and the plurality of points.

The method may partly be implemented in software and/or hardware. The electrical machine may be an electrical generator or an electrical motor. In particular, the electrical machine may be an electrical generator of a wind turbine.

Measuring a plurality of points in a rotor of an electrical machine helps in defining the shape of the rotor or the eccentricity of the rotor one the rotor is coupled to the stator of the electrical machine. This may be used for conveniently coupling a plurality of magnets in the plurality of seats, so that the thickness of the air gap between the rotor and the stator is kept constant and as close as possible to a minimum desired value.

In a second aspect of the invention, an assembly method for assembling a rotor of an electrical machine is provided. The method includes the steps of:
defining a plurality of points on the rotor house to be measured as described above,
defining an optimum position for the axis of the rotor bearing so that a variability parameter of a plurality of distances between said optimum position and the plurality of points on the rotor house is minimized,
changing the position of the rotor bearing with respect to the rotor house, so that the distance between the axis of the rotor bearing and the optimum position is minimized.

The assembly method according to the present invention minimizes the eccentricity of the rotor when coupled to the stator.

According to embodiments of the present invention, the variability parameter may be any of:
a difference between a maximum and a minimum value of said plurality of distances,
a standard deviation of said plurality of distances.

According to embodiments of the present invention, at least a portion of the plurality of points to be measured are defined on the rotor bearing. At least another portion of the plurality of points to be measured are defined on an inside of the rotor house. Two pluralities of points may be measured, the two pluralities of points being respectively defined on respective planes at two respective axial ends of the rotor house or respectively close thereto. A third plurality of points may be measured, the third plurality of points being axially intermediate between the two axial ends of the rotor house.

According to a third aspect the present invention it is provided a measurement arrangement for measuring the position of a plurality of points in a rotor of an electrical machine, the rotor including a rotor house and a rotor bearing, the arrangement including:
a supporting structure for receiving an assembly including the rotor house, the rotor bearing and the brake disc,
a measurement device movable with respect to the supporting structure for measuring a plurality of distances between an axis of the rotor house and the plurality of points.

According to embodiments of the present invention, wherein the measurement device is an optic device, particularly it may be laser device. The measurement device may be a light detection and ranging device.

It should be understood, that features, individually or in any combination, disclosed, described, explained or provided for a method for measuring the position of a plurality of points in a rotor of an electrical machine are also, individually or in any combination, applicable to a measurement arrangement for measuring the position of a plurality of points in a rotor of an electrical machine according to embodiments of the present invention and vice versa.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a partial view of a wind turbine including an electrical generator.
- Figure 2: shows a schematic section of an electrical generator to be mounted on the wind turbine of Fig. 1.
- Figure 3: shows an exploded view of an electrical generator to be mounted on the wind turbine of Fig. 1.
- Figure 4: shows a partial view of a rotor for the electrical generator of Fig. 2 including a brake disc.
- Figure 5: shows another view of the rotor of figure 4, where a plurality of measurement points are represented, which are measured with a measurement method according to the present invention.
- Figure 6: shows a measurement device which is usable for performing the measurement method according to the present invention.
- Figure 7: shows results of the measurement method according to the present invention.
- Figure 8: shows a step of an assembly method for assembling a rotor for an electrical generator according to the present invention.

### Detailed Description

The illustrations in the drawings are schematic. It is noted that in different figures, similar or identical elements are provided with the same reference signs.

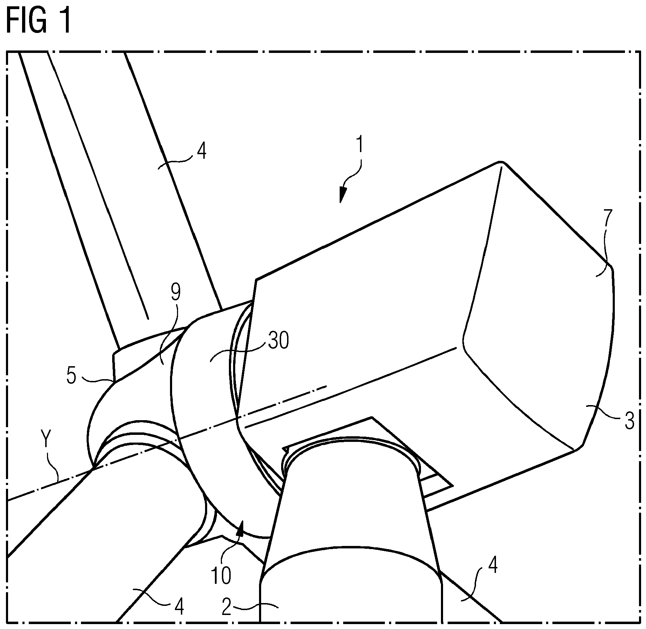

**Figure** 1 shows a wind turbine 1 according to the invention. The wind turbine 1 comprises a tower 2, which is mounted on a non-depicted foundation. A nacelle 3 is arranged on top of the tower 2. The nacelle 3 comprises a main frame 7 rotatably coupled with the tower 2, an electrical generator 10 rotatably coupled with the main frame 7 and an hub 9 fixed to a rotor 30 of the electrical generator 10. The wind turbine 1 further comprises a wind rotor 5 including the hub 9 and at least one blade 4 fixed to the hub 9 (in the embodiment of Figure 1, the wind rotor comprises three blades 4. The wind rotor 5 is rotatable around a rotational longitudinal axis Y. The blades 4 extend substantially radially with respect to the longitudinal rotational axis Y. In general, when not differently specified, the terms axial, radial and circumferential in the following are made with reference to the longitudinal rotational axis Y. The electrical generator 10 including the rotor 30 and a stator (not visible in figure 1) fixed to the main frame 7 of the nacelle 3. In the embodiment of the attached figures the rotor 30 is radially external to the stator. The rotor 30 is rotatable with respect to the stator about the longitudinal rotational axis Y.

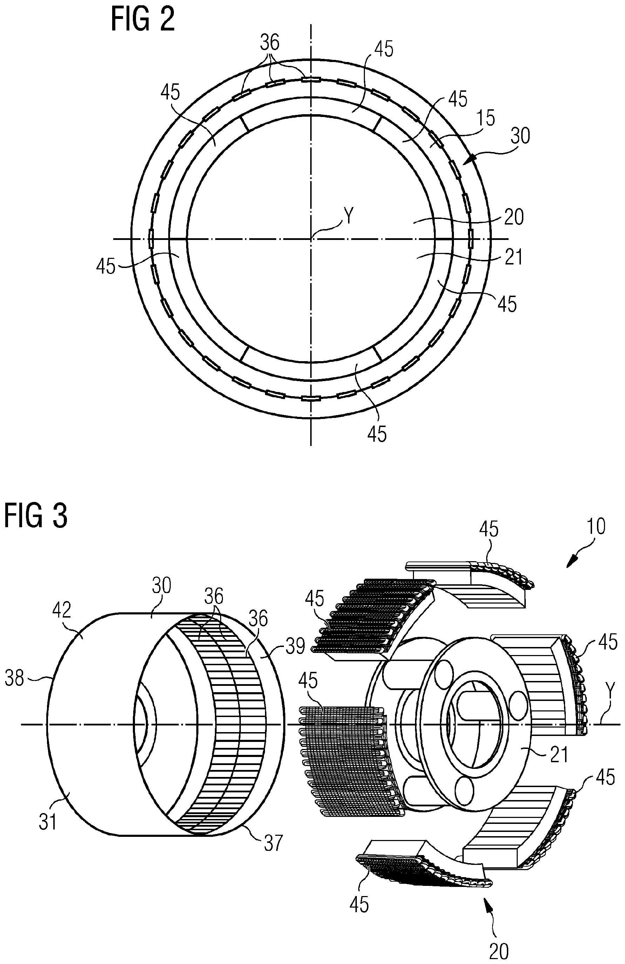

**Figure 2** shows a schematic view of a cross section of the electrical generator 10 on a radial plane orthogonal to the longitudinal rotational axis Y. The electrical generator 10 including the rotor 30 and the stator 20, which is radially internal to the rotor 30. In Fig. 2 the rotor 30 and the stator 20 are ideally represents as two coaxial ideal cylinders. The electrical generator 10 comprises an airgap 15 radially interposed between the stator 20 and the rotor 30, the airgap 15 extending circumferentially about the rotational axis Y. The stator 20 comprises a cylindrical inner core 21 to which six segments 45 are attached. Each segment 45 has a circumferential angular extension of 60°. According to other embodiments of the present invention, the stator 20 comprises a plurality of segments having another number (different from six) of segments. The rotor 30 comprises a plurality of circumferentially distributed permanent magnets 36 facing the airgap 15.

**Figure 3** shows an exploded view of the electrical generator 10 showing axonometric schematic representation of the rotor 30 and the stator 20. The rotor 30 comprises a cylindrical rotor house 31 axially extending between a drive end 37, which is subject to be mounted adjacent to the hub of the wind rotor 5, and an axially opposite non-drive end 38, which is subject to be mounted adjacent to the main frame 7 of the nacelle 3. The rotor house has cylindrical hollow shape radially extending between an inner surface 39, on which a plurality of respective seats for the permanent magnets 36 are defined, and an external surface 42. The magnets 31 are distributed on the inner side 39 of the rotor house 31 according to axial columns. Each column of magnets comprises a plurality of magnets 36 (for example two magnets 36 as shown in figure 2) aligned along the rotational axis Y.

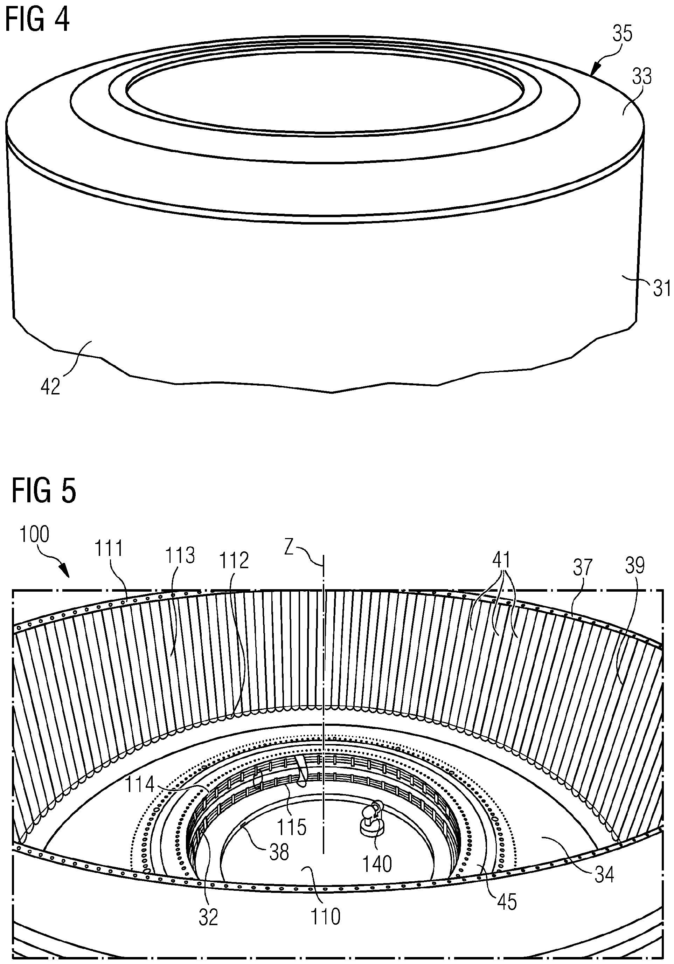

**Figure 4** shows an assembly 35 including components of the rotor 30. The assembly 35 includes the rotor house 31, a brake disc 33 and a rotor bearing 32 (not visible in the view of figure 4, where the external surface 42 of the rotor house 31 is shown). The brake disc 33 is provided at the non-drive end 38 and radially extends from the rotor house 31 towards the axis of the rotor house 31. According to embodiments of the present invention, the assembly 35 may not include a brake disc 33.

**Figure 5** shows an inside of the assembly 35, where the rotor bearing 32 and the inner surface 39 of the rotor house 31 are visible. The rotor bearing 32 is provided at the non-drive end 38 and in operation is coupled with the stator 20, thus permitting the rotation of the rotor 30 with respect to the longitudinal axis Y of the generator 10. The rotor bearing 32 defines an axis of rotation which is in operation to be ideally aligned to the longitudinal axis Y. The rotor bearing 32 axially extend between the brake disc 33 and an inner rotor plate 34. The inner rotor plate 34 extends radially between the rotor bearing 32 and the inner surface 39, the inner rotor plate 34 being fixed to an inner front surface 46 of the rotor bearing 32. On the inner surface 39 a plurality of axially extending seats 41 for the permanent magnets 36 are defined. Figure 5 further shows a measurement arrangement 100 for measuring the position of a plurality of points 111, 112, 113, 114, 115 in the assembly 35. The measurement arrangement 100 includes a supporting structure, for example a 101 for receiving and supporting the assembly 35. The measurement arrangement 100 includes a measurement device 140 movable with respect to the supporting structure 101 for measuring a plurality of distances between the axis Z and the plurality of points 111, 112, 113, 114, 115 to be measured. At least a portion of the plurality of points 111, 112, 113, 114, 115 to be measured may be defined on an inside of the rotor house 31, i.e. on the inner surface 39 or along the seats 41 for the permanent magnets 36. A first plurality of points 111 may be defined at the drive end 37. Each of the first plurality of points 111 may be for example defined along a respective seat 41 for the permanent magnets 36. A second plurality of points 112 may be defined at the opposite axial ends of the seat 41, i.e. the axial ends of the seat 41 that are closer to the non-drive end 38. A third plurality of points 113 may be defined along the seat 41 for the permanent magnets 36 at intermediate positions between the first plurality of points 111 and the second plurality of points 112. The third plurality of points 113 may lie on a same plane orthogonal the axis Z. A fourth plurality of points 114 may be defined on the rotor bearing 32, for example along the border of the rotor bearing 32 which is closer to the drive end 37. The fourth plurality of points 114 may be defined also on the inner front surface 46 of the rotor bearing 32. Reflectors may be positioned on the inner front surface 46 to facilitate the measurements by the measurement device 140. A fifth plurality of points 115 along the border of the rotor bearing 32 which is closer to the non-drive end 38.

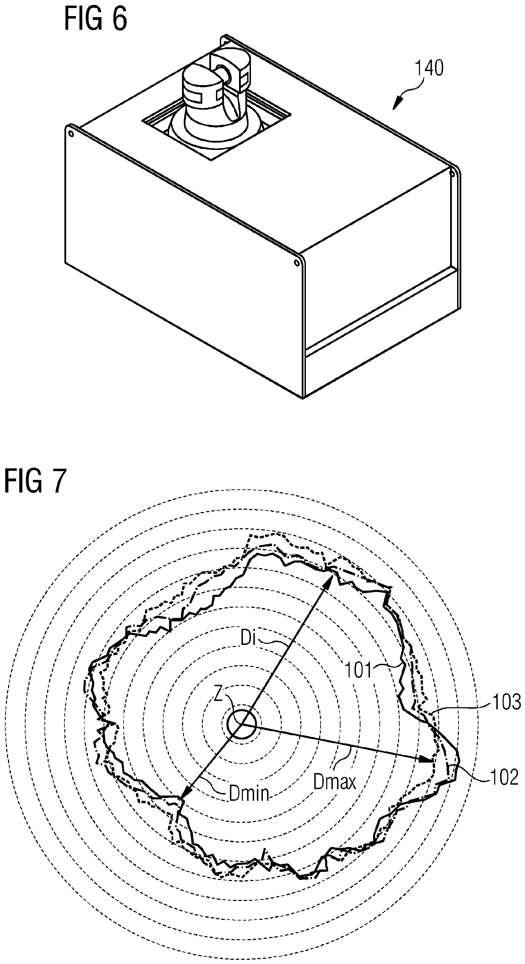

**Figure 6** shows a magnified view of the measurement device 140. The measurement device 140 may be an optic device, in particular a laser device. The measurement device 140 may be a light detection and ranging device.

**Figure 7** shows three curves 101, 102, 103, which graphically represent the positions of the first second and third plurality of points 111, 112, 113 with respect to an axis Z of the rotor house 31 (center point in figure 7). At each angular position about the axis Z the radial distance Di of the points of each of the three curves 101, 102, 103 represents the distance of a respective magnet seat 41 from the axis Z. The value of Di varies about the axis Z, spanning from a minimum value Dmin to a maximum value Dmax. The set of measurements Di provides information about the shape of the rotor house 31, i.e. the distance of the plurality of seats 41 from the axis Z. Such information may be used for conveniently coupling a plurality of magnets in the plurality of seats 41, so that the thickness of the air gap 15 is kept constant and as close as possible to a minimum desired value. To such extent a magnet 36 having a maximum radial thickness may be conveniently mounted in the seat 41 corresponding to the maximum value Dmax and a magnet 36 having a minimum radial thickness may be conveniently mounted in the seat 41 corresponding to the minimum value Dmin.

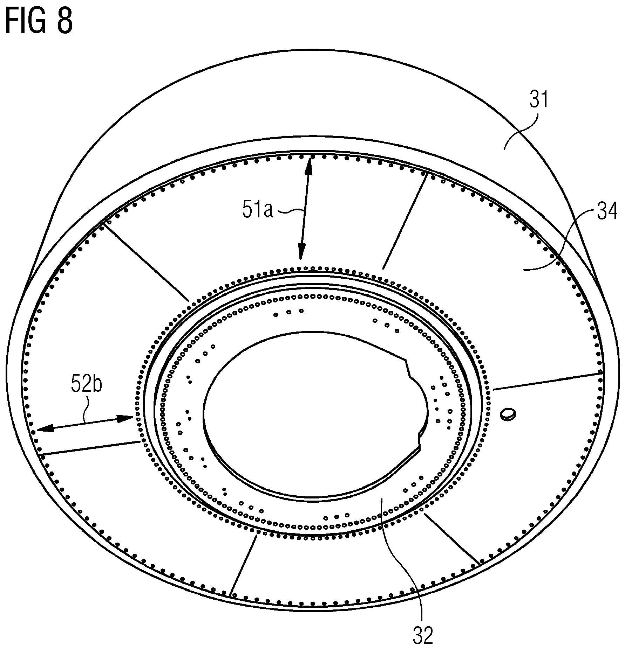

As shown in **Figure 8****,** the information provided by the set of measurements Di may be used for defining an optimum position of the axis of rotation of the rotor bearing, so that the axis Z is ideally coincident with the rotation axis of the rotor bearing. This minimizes the eccentricity of the rotor 30 when coupled to the stator 20. The optimum position for the axis of rotation of the rotor bearing may be defined as the position in which a variability parameter of a plurality of radial distances Di between said optimum position and the plurality of the measured points 111, 112, 113 on the rotor house 31 is minimized. Any variability parameter may be chosen for defining the optimum position of the axis of rotation of the rotor bearing, for example a difference between a maximum and a minimum value of the plurality of radial distances Di or a standard deviation of the plurality of distances Di. After the optimum position of the axis of rotation of the rotor bearing with respect to the rotor house has been defined, the position of the rotor bearing 32 in the assembly 35 may be changed (as graphically represented by two arrows 52a, 52b in fig. 8), so that the distance between the axis of rotation of the rotor bearing and such optimum position is minimized or reduced to zero. The above procedure may be used for minimizing the misalignment between the geometric axes of the rotor and the stator. After the new position of the rotor bearing 32 in the assembly 35 is defined, a plurality of magnets may be mounted in the plurality of seats 41.

## Claims

1. A method for measuring the position of a plurality of points (111, 112, 113, 114, 115) in a rotor (30) of an electrical machine (10), the rotor (30) including a rotor house (31), a rotor bearing (32) and a brake disc (33), the method including the steps of:
forming an assembly (35) including the rotor house (31), the rotor bearing (32) and the brake disc (33),
mounting a measurement device (140) inside the assembly (35),
relatively moving the rotor (30) and the measurement device (40) and determining a plurality of distances between an axis of the rotor house (31) and the plurality of points (111, 112, 113, 114, 115).

2. The method according to claim 1, wherein at least a portion of the plurality of points are defined on the rotor bearing (32).

3. The method according to claim 1 or 2, wherein at least a portion of the plurality of points are defined on an inside of the rotor house (31).

4. The method according to claim 3, wherein two pluralities of points are measured, the two pluralities of points being respectively defined at two respective axial ends of the rotor house (31).

5. The method according to claim 4, wherein at least a third plurality of points is measured, the third plurality of points being axially intermediate between the two axial ends of the rotor house (31).

6. The method according to any of the claims 3 to 5, wherein the points to be measured on the rotor house (31) are defined on a plurality of seats (41) for receiving a plurality of permanent magnets.

7. An assembly method for assembling a rotor (30) of an electrical machine (10), the rotor (30) including a rotor house (31) and a rotor bearing (32), the method including the steps of:
defining a plurality of points on the rotor house (31) to be measured according to any of the claims 3 to 6,
defining an optimum position for the axis of the rotor bearing (32) so that a variability parameter of a plurality of distances (Di) between said optimum position and the plurality of points on the rotor house (31) is minimized,
changing the position of the rotor bearing (32) with respect to the rotor house (31), so that the distance between the axis of the rotor bearing (32) and the optimum position is minimized.

8. An assembly method according to claim 7, wherein the variability parameter is any of:
a difference between a maximum and a minimum value of said plurality of distances,
a standard deviation of said plurality of distances.

9. A measurement arrangement (100) for measuring the position of a plurality of points (111, 112, 113, 114, 115) in a rotor (30) of an electrical machine (10) for a wind turbine (1), the rotor (30) including a rotor house (31) and a rotor bearing (32), the arrangement including:
a supporting structure (101) for receiving an assembly (35) including the rotor house (31), the rotor bearing (32) and the brake disc (33),
a measurement device (140) movable with respect to the supporting structure (101) for measuring a plurality of distances between an axis of the rotor bearing (32) and the plurality of points.

10. The measurement arrangement according to the previous claim, wherein the measurement device (140) is an optic device.

11. The measurement arrangement according to claim 10, wherein the measurement device (140) is a laser device.

12. The measurement arrangement according to claim 11, wherein the measurement device (140) is light detection and ranging device.
